# EUROPEAN PATENT APPLICATION

(11) **EP 2 325 738 A1**
(43) Date of publication of application: **25.05.2011**
(21) Application number: 10188996.2
(22) Date of filing: 27.10.2010
(51) Int. Cl.: G06F 3/048

(54) **Data selection and display methods and systems**

(30) Priority: 29.10.2009 TW 98136628
(71) Applicant: HTC Corporation, Taoyuan County 330 (TW)
(72) Inventor: Chu, Yen-Lee, Taoyuan City, Taoyuan County 330 (TW); Kao Yih-Feng, Taoyuan City, Taoyuan County 330 (TW); Wang, Hui-Wen, Taoyuan City, Taoyuan County 330 (TW)
(74) Representative: 2K Patentanwälte Blasberg Kewitz & Reichel

(57) **Abstract**

Data selection and display methods and systems are provided. First, data including a plurality of characters/symbols is displayed in a touch-sensitive display unit. A contact corresponding to an input tool on the touch-sensitive display unit is detected. According to the contact position on the touch-sensitive display unit, a plurality of candidate characters/symbols is determined from the characters/symbols, and a specific position where the candidate characters/symbols to be displayed in the touch-sensitive display unit is re-determined. Then, the candidate characters/symbols are displayed at the specific position in the touch-sensitive display unit.

## Description

### CROSS REFERENCE TO RELATED APPLICATIONS

This Application claims priority of Taiwan Patent Application No. 098136628, filed on October 29, 2009, the entirety of which is incorporated by reference herein.

### BACKGROUND OF THE INVENTION

### Field of the Invention

The disclosure relates generally to data selection and display methods and systems, and, more particularly to methods and systems that adjust the display position of characters/symbols when the characters/symbols are selected via a touch-sensitive display unit.

### Description of the Related Art

Recently, portable devices, such as handheld devices, have become more and more technically advanced and multifunctional. For example, a handheld device may have telecommunication capabilities, e-mail message capabilities, an advanced address book management system, a media playback system, and various other functions. Due to increased convenience and functions of the devices, these devices have become basic life necessities.

Currently, a handheld device may be equipped with a touch-sensitive display unit. Users can directly perform operations, such as application operations and data input, via the touch-sensitive display unit. In some situations, users may have a need to edit characters/symbols displayed in the touch-sensitive display unit. However, since the limitations of size of the touch-sensitive display unit and size of the characters/symbols can be displayed in the touch-sensitive display unit, the cursor and characters/symbols may be continually obstructed by users' finger when users select the characters/symbols displayed in the touch-sensitive display unit, such that users cannot precisely select a section of characters/symbols, and/or determine the cursor position, which makes operating inconvenient and troublesome.

### BRIEF SUMMARY OF THE INVENTION

Data selection and display methods and systems are provided.

In an embodiment of a data selection and display method, data, including a plurality of characters/symbols is displayed in a touch-sensitive display unit. A contact corresponding to an input tool on the touch-sensitive display unit is detected. According to the contact position on the touch-sensitive display unit, a plurality of candidate characters/symbols is determined from the characters/symbols, and a specific position where the candidate characters/symbols to be displayed in the touch-sensitive display unit is re-determined. Then, the candidate characters/symbols are displayed at the specific position in the touch-sensitive display unit.

An embodiment of a data selection and display system includes a touch-sensitive display unit and a processing unit. The touch-sensitive display unit displays data including a plurality of characters/symbols. The processing unit detects a contact corresponding to an input tool on the touch-sensitive display unit. According to the contact position on the touch-sensitive display unit, the processing unit determines a plurality of candidate characters/symbols from the characters/symbols, and re-determines a specific position where the candidate characters/symbols to be displayed in the touch-sensitive display unit. Then, the processing unit displays the candidate characters/symbols at the specific position in the touch-sensitive display unit.

In some embodiments, a movement on the touch-sensitive display unit is detected, and the candidate characters/symbols is moved according to the movement.

In some embodiments, a cursor can be displayed within the candidate characters/symbols according to the contact position. A movement on the touch-sensitive display unit is detected, and the cursor is moved among the candidate characters/symbols according to the movement.

Data selection and display methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a data selection and display system of the invention;

Fig. 2 is a flowchart of an embodiment of a data selection and display method of the invention;

Fig. 3A is a schematic diagram illustrating an embodiment of an example of a touch-sensitive display unit displaying data of the invention;

Fig. 3B is a schematic diagram illustrating an embodiment of an example of data selection and display of the invention;

Fig. 4 is a flowchart of another embodiment of a data selection and display method of the invention;

Fig. 5A is a schematic diagram illustrating an embodiment of an example of a touch-sensitive display unit displaying data with a cursor of the invention; and

Fig. 5B is a schematic diagram illustrating an embodiment of an example of cursor movement of the invention.

### DETAILED DESCRIPTION OF THE INVENTION

Data selection and display methods and systems are provided.

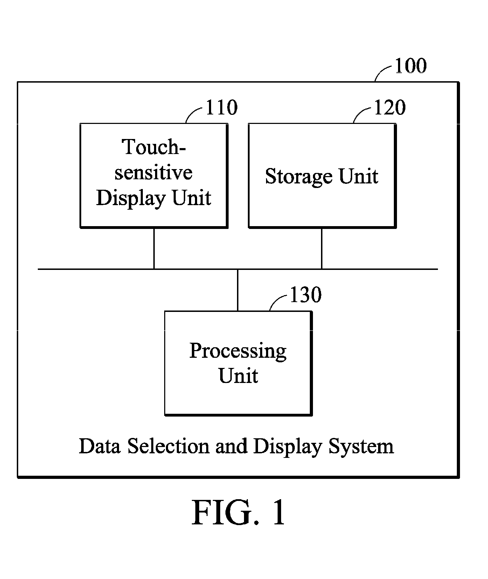

Fig. 1 is a schematic diagram illustrating an embodiment of a data selection and display system of the invention. The data selection and display system 100 can be used in an electronic device, such as a portable device comprising handheld devices such as a PDA (Personal Digital Assistant), a smart phone, a mobile phone, a MID (Mobile Internet Device, MID), and a Netbook.

The data selection and display system 100 comprises a touch-sensitive display unit 110, a storage unit 120, and a processing unit 130. The touch-sensitive display unit 110 is a screen integrated with a touch-sensitive device (not shown). The touch-sensitive device has a touch-sensitive surface comprising sensors in at least one dimension to detect contact and movement of an input tool (object), such as a stylus or finger on the touch-sensitive surface. The touch-sensitive display unit 110 can display related data, and/or related figures and interfaces. The storage unit 120 comprises data, which can be provided to the touch-sensitive display unit 110 for display. In some embodiments, the data can comprise a plurality of characters/symbols. The processing unit 130 performs the data selection and display method of the invention, which will be discussed further in the following paragraphs.

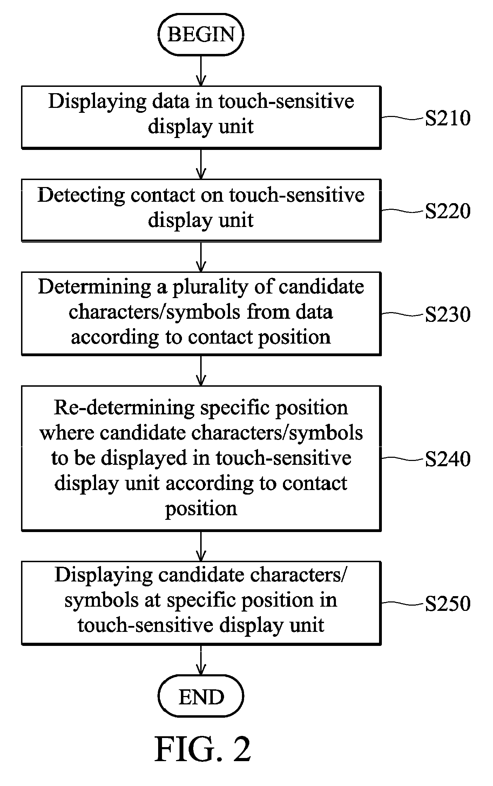

Fig. 2 is a flowchart of an embodiment of a data selection and display method of the invention. The data selection and display method can be used for an electronic device, such as a portable device comprising handheld devices such as a PDA, a smart phone, a mobile phone, an MID, and a Netbook.

In step S210, data including a plurality of characters/symbols is displayed in a touch-sensitive display unit. In step S220, a contact corresponding to an input tool, such as a finger or a stylus on the touch-sensitive display unit is detected. In step S230, according to the contact position on the touch-sensitive display unit, a plurality of candidate characters/symbols is determined from the characters/symbols displayed in the touch-sensitive display unit. It is understood that, in some embodiments, a predefined number of characters/symbols around the contact position can be determined as the candidate characters/symbols. In some embodiments, the contact position is in the center of the candidate characters/symbols. In some embodiments, a row or a column of characters/symbols located at the contact position can be determined as the candidate characters/symbols. Additionally, in some embodiments, the contact corresponding to the input tool may have a contact range. The characters/symbols within the contact range can be determined as the candidate characters/symbols. Then, in step S240, according to the contact position on the touch-sensitive display unit, a specific position where the candidate characters/symbols to be displayed in the touch-sensitive display unit is re-determined. It is understood that, in some embodiments, the specific position may be around the contact position. In some embodiments, a distance between the re-determined specific position and the contact position may be a predefined length. Additionally, as described, the contact corresponding to the input tool may have a contact range. In some embodiments, the specific position may be located outside of the contact range. After the specific position is determined, in step S250, the candidate characters/symbols are displayed at the specific position in the touch-sensitive display unit, such that the candidate characters/symbols are not obstructed by the input tool. It is understood that, in some embodiments, an interface can be first displayed at the specific position in the touch-sensitive display unit, and the candidate characters/symbols are displayed on the interface. It is noted that, the interface may be translucent or have a specific color.

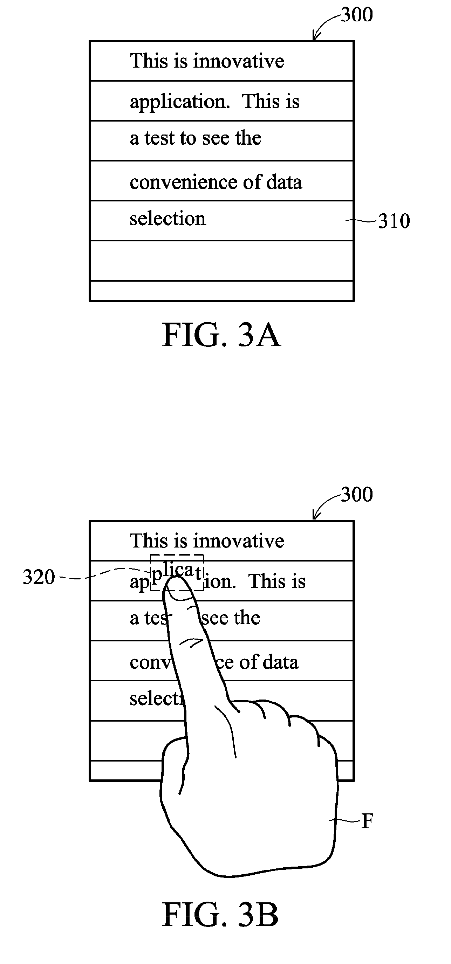

For example, a touch-sensitive display unit 300 displays data 310, as shown in Fig. 3A. When a user uses a finger F to touch a position corresponding to characters "application" in the touch-sensitive display unit 300, parts of the characters, such as "plicat" 320 are selected as candidate characters/symbols, as shown in Fig. 3B. In this example, the re-determined specific position is above the contact position of the finger F, therefore, the candidate characters/symbols are displayed at the specific position, such that characters "plicat" 320 are not obstructed by the finger F.

In some embodiments, the input tool can continue to move on the touch-sensitive display unit. The processing unit can detect the movement of the input tool on the touch-sensitive display unit, and move the candidate characters/symbols to another position of the data according to the movement of the input tool.

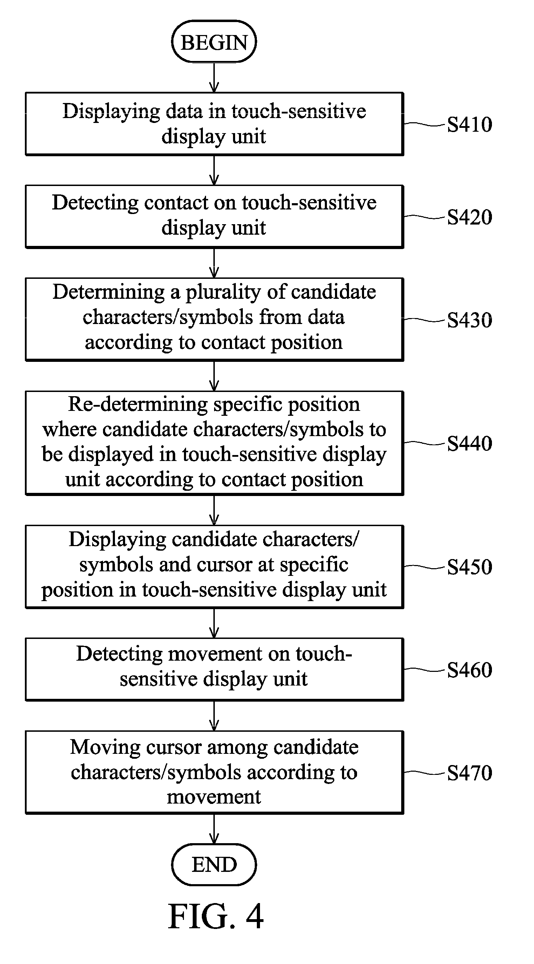

Fig. 4 is a flowchart of another embodiment of a data selection and display method of the invention. The data selection and display method can be used for an electronic device, such as a portable device comprising handheld devices such as a PDA, a smart phone, a mobile phone, an MID, and a Netbook.

In step S410, data including a plurality of characters/symbols is displayed in a touch-sensitive display unit. In step S420, a contact corresponding to an input tool, such as a finger or a stylus on the touch-sensitive display unit is detected. In step S430, according to the contact position on the touch-sensitive display unit, a plurality of candidate characters/symbols is determined from the characters/symbols displayed in the touch-sensitive display unit. Similarly, in some embodiments, a predefined number of characters/symbols around the contact position can be determined as the candidate characters/symbols. In some embodiments, the contact position is in the center of the candidate characters/symbols. In some embodiments, a row or a column of characters/symbols located at the contact position can be determined as the candidate characters/symbols. In some embodiments, the contact corresponding to the input tool may have a contact range. The characters/symbols within the contact range can be determined as the candidate characters/symbols. Then, in step S440, according to the contact position on the touch-sensitive display unit, a specific position where the candidate characters/symbols to be displayed in the touch-sensitive display unit is re-determined. Similarly, in some embodiments, the specific position may be around the contact position. In some embodiments, a distance between the re-determined specific position and the contact position may be a predefined length. Additionally, as described, the contact corresponding to the input tool may have a contact range. In some embodiments, the specific position may be located at outside of the contact range. After the specific position is determined, in step S450, the candidate characters/symbols are displayed at the specific position in the touch-sensitive display unit, and a cursor is displayed within the candidate characters/symbols according to the contact position. Similarly, in some embodiments, an interface can be first displayed at the specific position in the touch-sensitive display unit, and the candidate characters/symbols are displayed on the interface. It is noted that, the interface may be translucent or have a specific color. Then, in step S460, a movement on the touch-sensitive display unit is detected, and in step S470, the cursor is moved among the candidate characters/symbols according to the movement. It is understood that, in some embodiments, when the movement is detected, the candidate characters/symbols may be re-determined according to the contact position of the movement, and the display position of the candidate characters/symbols may be accordingly adjusted.

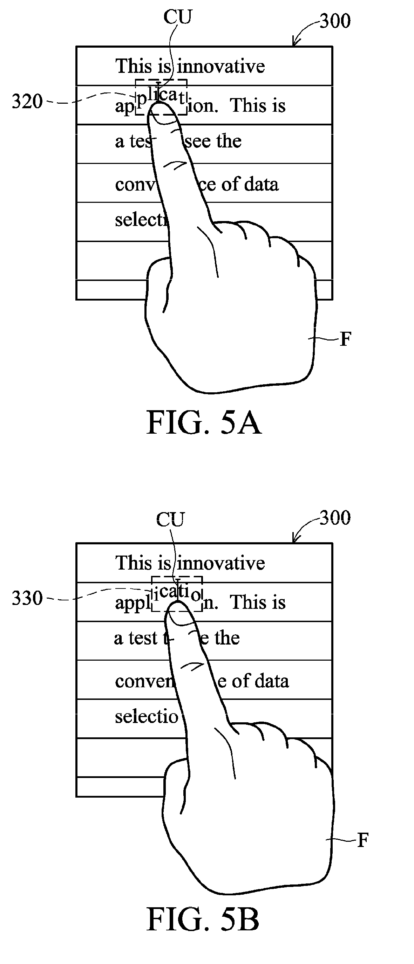

For example, a cursor CU can be displayed within characters "plicat" 320 in Fig. 3B according to the contact position, as shown in Fig. 5A. When the finger F moves toward right of the touch-sensitive display unit, characters "icatio" 330 are re-determined as the candidate characters/symbols. In response to the movement of the finger F, the cursor CU is also accordingly moved within the candidate characters/symbols, as shown in Fig. 5B.

Therefore, the data selection and display methods and systems can adjust the display position of characters/symbols when the characters/symbols are selected via a touch-sensitive display unit. By adjusting the display position of characters/symbols, the convenience of viewing and selecting characters/symbols and/or determining the cursor position can be improved.

Data selection and display methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalents.

## Claims

1. A data selection and display method for use in an electronic device, comprising:
displaying data comprising a plurality of characters/symbols in a touch-sensitive display unit;
detecting a contact corresponding to an input tool on the touch-sensitive
display unit;
determining a plurality of candidate characters/symbols from the
characters/symbols according to the contact position on the touch-sensitive display unit;
re-determining a specific position where the candidate characters/symbols to
be displayed in the touch-sensitive display unit according to the contact position on the touch-sensitive display unit; and
displaying the candidate characters/symbols at the specific position in the
touch-sensitive display unit.

2. The method of claim 1, wherein a predefined number of the characters/symbols around the contact position is determined as the candidate characters/symbols, wherein the contact position is in the center of the candidate characters/symbols.

3. The method of claim 1, wherein the contact corresponding to the input tool has a contact range, and the characters/symbols within the contact range are determined as the candidate characters/symbols.

4. The method of claim 1, wherein a row or a column of the characters/symbols located at the contact position is determined as the candidate characters/symbols.

5. The method of claim 1, wherein the specific position is determined around the contact position.

6. The method of claim 5, wherein a distance between the specific position and the contact position is a predefined length.

7. A data selection and display system for use in an electronic device, comprising:
a touch-sensitive display unit displaying data, wherein the data comprises a
plurality of characters/symbols; and
a processing unit detecting a contact corresponding to an input tool on the
touch-sensitive display unit, determining a plurality of candidate characters/symbols from the characters/symbols according to the contact position on the touch-sensitive display unit, re-determining a specific position where the candidate characters/symbols to be displayed in the touch-sensitive display unit according to the contact position on the touch-sensitive display unit, and displaying the candidate characters/symbols at the specific position in the touch-sensitive display unit.

8. The system of claim 7, wherein the processing unit determines a predefined number of the characters/symbols around the contact position as the candidate characters/symbols, wherein the contact position is in the center of the candidate characters/symbols.

9. The system of claim 7, wherein the contact corresponding to the input tool has a contact range, and the processing unit determines the characters/symbols within the contact range as the candidate characters/symbols.

10. The system of claim 7, wherein the processing unit determines a row or a column of the characters/symbols located at the contact position as the candidate characters/symbols.

11. The system of claim 7, wherein the specific position is determined around the contact position.

12. The system of claim 11, wherein a distance between the specific position and the contact position is a predefined length.
